# EUROPEAN PATENT APPLICATION

(11) **EP 4 068 451 A1**
(43) Date of publication of application: **05.10.2022**
(21) Application number: 22165976.6
(22) Date of filing: 31.03.2022
(51) Int. Cl.: H01M 10/052, H01M 50/105, H01M 50/124, H01M 50/136, H01M 50/211, H01M 50/238, H01M 50/242

(54) **POWER STORAGE DEVICE**

(30) Priority: 31.03.2021 JP 2021060852
(71) Applicant: TOYOTA JIDOSHA KABUSHIKI KAISHA, Toyota-shi, Aichi-ken, 471-8571 (JP)
(72) Inventor: KATO, Masashi, Toyota-shi, 471-8571 (JP)
(74) Representative: D Young & Co LLP

(57) **Abstract**

A power storage device (10) includes: a stack (102, 103) in which a plurality of power storage cells (101) are stacked in a stacking direction (H); and an accommodation case (200) that accommodates the stack (102, 103). The accommodation case (200) includes: a top plate (210) and a bottom plate (220) each facing the stack (102, 103) in the stacking direction (H); and a side wall (230, 240) facing the stack (102, 103) in a width direction (W) orthogonal to the stacking direction (H). The side wall (230, 240) has an extension portion (231, 241) extending in a direction intersecting with the stacking direction (H).

## Description

This nonprovisional application is based on Japanese Patent Application No. 2021-060852 filed on March 31, 2021 with the Japan Patent Office, the entire contents of which are hereby incorporated by reference.

### BACKGROUND

### Field

The present disclosure relates to a power storage device.

### Description of the Background Art

Japanese Patent Laying-Open No. 2008-235170 discloses a battery pack having a case accommodating a cell assembly in which a plurality of cells are stacked.

### SUMMARY

A stack of cells expands and contracts due to charging and discharging. In the battery pack disclosed in the above-mentioned document, expansion of the cells may increase the pressure acting on these cells.

The present disclosure proposes a power storage device capable of suppressing an increase in pressure acting on power storage cells.

A power storage device according to the present disclosure includes: a stack in which a plurality of power storage cells are stacked in a stacking direction; and an accommodation case that accommodates the stack. The accommodation case includes: a first wall portion facing the stack in the stacking direction; and a second wall portion facing the stack in a direction orthogonal to the stacking direction. The second wall portion has an extension portion extending in a direction intersecting with the stacking direction.

The second wall portion of the accommodation case has the extension portion as described above. Thereby, when the power storage cells expand in the stacking direction, the second wall portion is allowed to deform to extend in the stacking direction as the power storage cells expand. This suppresses an increase in force with which the stack of the power storage cells presses the first wall portion, and the reaction of this force also suppresses an increase in force to be applied to the power storage cells. Thereby, an increase in pressure acting on the power storage cells can be suppressed.

In the power storage device, the second wall portion may have the extension portion having a bent shape or a curved shape. This allows a configuration in which the second wall portion reliably has a portion extending in a direction intersecting with the stacking direction.

The power storage device may further include an expansion absorbing member having a corrugated plate shape and disposed between the power storage cells in the stacking direction.

When the power storage device undergoes vibrations, the power storage device deforms to be entirely bent and, in some cases, may resonate. Thus, the power storage device desirably has high flexural rigidity as a vibration system. Since the power storage device includes the expansion absorbing member, the flexural rigidity of this power storage device can be improved.

In the power storage device, the expansion absorbing member may be connected to the second wall portion. Thereby, the flexural rigidity of the power storage device can be more reliably improved.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a cross-sectional view schematically showing a configuration of a power storage device according to a first embodiment.
Fig. 2 is a cross-sectional view schematically showing a configuration of a power storage device according to a second embodiment.
Fig. 3 is a cross-sectional view schematically showing a configuration of a power storage device according to a third embodiment.

### DESCRIPTION OF THE PREFERRED EMBODIMENTS

Embodiments will be hereinafter described with reference to the accompanying drawings. In the following description, the same components are denoted by the same reference characters. Their names and functions are also the same. Accordingly, the detailed description thereof will not be repeated.

### (First Embodiment)

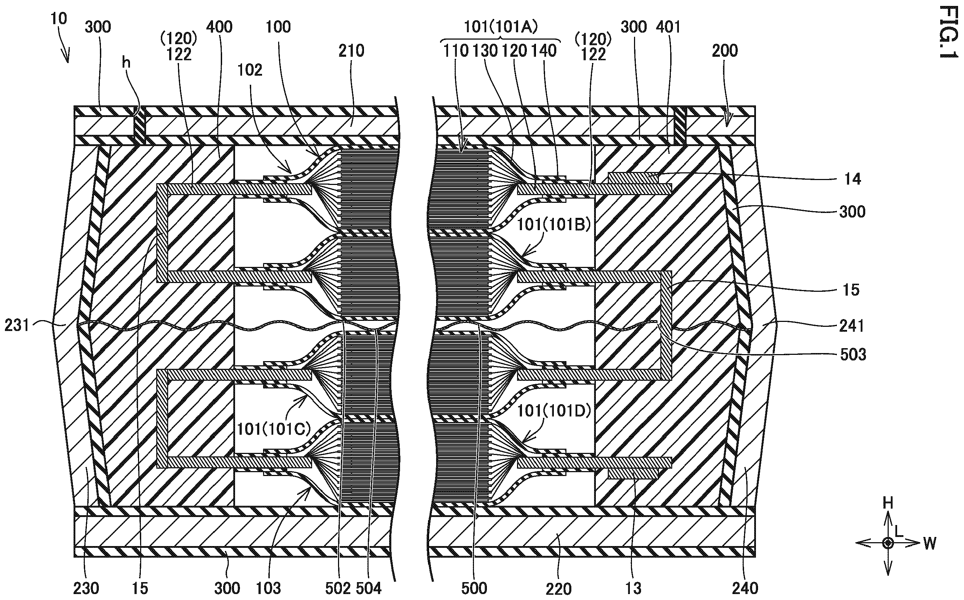

Fig. 1 is a cross-sectional view schematically showing a configuration of a power storage device 10 according to the first embodiment. Power storage device 10 is mounted, for example, on a vehicle such as an electric vehicle, a hybrid vehicle, or a fuel cell vehicle.

As shown in Fig. 1, power storage device 10 mainly includes a power storage module 100, an accommodation case 200, an insulating sheet 300, filling portions 400 and 401, and an expansion absorbing member 500.

Power storage module 100 includes at least one power storage cell 101. In the present embodiment, power storage module 100 includes a plurality of power storage cells 101A, 101B, 101C, and 101D. Power storage cells 101A, 101B, 101C, and 101D are stacked in a stacking direction H (in the up-down direction in Fig. 1).

Power storage cells 101A and 101B stacked in stacking direction H form a first stack 102. Power storage cells 101C and 101D stacked in stacking direction H form a second stack 103. First stack 102 and second stack 103 are arranged side by side in stacking direction H.

The number of power storage cells 101 included in power storage module 100 is not particularly limited. The number of power storage cells 101 included in the stack of power storage cells 101 is not particularly limited. The number of stacks included in power storage module 100 is not particularly limited. An example of power storage cell 101 may be a lithium ion battery.

Power storage cell 101 is what is called a laminate-type cell. Each power storage cell 101 includes a plurality of electrode assemblies 110, a pair of current collector plates 120, a laminate film 130, an adhesive member 140, and an electrolytic solution (not shown).

Each of electrode assemblies 110 includes a plurality of positive electrode sheets, a plurality of separators, and a plurality of negative electrode sheets. A separator is disposed between the positive electrode sheet and the negative electrode sheet. The positive electrode sheets, the separators, and the negative electrode sheets are stacked in stacking direction H.

Each positive electrode sheet includes an aluminum foil and a positive electrode composite layer formed on each of the front and rear surfaces of the aluminum foil. The aluminum foil has an uncoated portion on which no positive electrode composite layer is formed.

Each negative electrode sheet includes a copper foil and a negative electrode composite layer formed on each of the front and rear surfaces of the copper foil. The copper foil has an uncoated portion on which no negative electrode composite layer is formed.

One current collector plate 120 is disposed adjacent to electrode assembly 110 in a width direction W (in the left-right direction in Fig. 1). The other current collector plate 120 is disposed on the side opposite to one current collector plate 120 with respect to electrode assembly 110. The uncoated portion of each positive electrode sheet is connected to one current collector plate 120 while the uncoated portion of each negative electrode sheet is connected to the other current collector plate 120.

Laminate film 130 covers the plurality of electrode assemblies 110 and a part of current collector plate 120. Laminate film 130 is filled with an electrolytic solution (not shown). The outer peripheral edge portion of laminate film 130 is formed in a rectangular shape. Laminate film 130 is longer in a longitudinal direction L (in the direction perpendicular to the surface of the sheet of paper showing Fig. 1) and shorter in width direction W. Longitudinal direction L and width direction W intersect with (are orthogonal to) stacking direction H. Longitudinal direction L and width direction W intersect with (are orthogonal to) each other.

Current collector plate 120 has a protrusion 122 protruding from laminate film 130. Each protrusion 122 protrudes outward from the long side of laminate film 130. Protrusions 122 are connected by a bus bar 15 such that power storage cells 101 are electrically connected in series.

A bus bar 13 is connected to protrusion 122 of power storage cell 101D disposed at one end in stacking direction H. Bus bar 13 is connected to a positive electrode external terminal, for example. A bus bar 14 is connected to protrusion 122 of power storage cell 101A disposed at the other end in stacking direction H. Bus bar 14 is connected to a negative electrode external terminal, for example.

Adhesive member 140 serves to allow laminate film 130 to adhere to current collector plate 120. Adhesive member 140 is made of an insulating material (resins or the like). Adhesive member 140 is shaped to protrude from laminate film 130. In other words, adhesive member 140 covers a part of protrusion 122.

Accommodation case 200 accommodates power storage module 100. First stack 102 and second stack 103 each formed by stacking power storage cells 101 are accommodated in accommodation case 200. Accommodation case 200 is made of a metal material typified by aluminum. Accommodation case 200 typically has a substantially rectangular parallelepiped shape having a long side extending in longitudinal direction L and a short side extending in width direction W.

Accommodation case 200 includes a top plate 210, a bottom plate 220, and side walls 230 and 240. Top plate 210 and bottom plate 220 are spaced apart from each other in stacking direction H. Top plate 210 is disposed to face first stack 102 in stacking direction H. Bottom plate 220 is disposed to face second stack 103 in stacking direction H. Top plate 210 and bottom plate 220 correspond to the first wall portion of the embodiment.

Side walls 230 and 240 are spaced apart from each other in width direction W orthogonal to stacking direction H. Side walls 230 and 240 are disposed to face each of first stack 102 and second stack 103 in width direction W. Side walls 230 and 240 correspond to the second wall portion of the embodiment.

Side wall 230 has an extension portion 231. Side wall 240 has an extension portion 241. Extension portions 231 and 241 extend in the direction intersecting with stacking direction H. In the present embodiment, side wall 230 entirely has a bent shape that forms extension portion 231. Similarly, side wall 240 entirely has a bent shape that forms extension portion 241. Each of side walls 230 and 240 shown in Fig. 1 entirely extends in the direction inclined with respect to stacking direction H. Side wall 230 entirely forms extension portion 231, and side wall 240 entirely forms extension portion 241.

Side walls 230 and 240 each have a first portion located on an upper side in Fig. 1 and extending from top plate 210 toward bottom plate 220 to be away from power storage cell 101 (first stack 102). Side walls 230 and 240 each have a second portion located on a lower side in Fig. 1 and extending from top plate 210 toward bottom plate 220 to be closer to power storage cell 101 (second stack 103). The first portion and the second portion form an obtuse angle.

Extension portions 231 and 241 each may intersect with stacking direction H at any angle. Further, side walls 230 and 240 each do not necessarily have to be entirely bent. Only a portion of side wall 230 may extend in the direction intersecting with stacking direction H and may form extension portion 231. Only a portion of side wall 240 may extend in the direction intersecting with stacking direction H and may form extension portion 241. Side walls 230 and 240 each may have a portion extending in stacking direction H and a portion extending in the direction intersecting with stacking direction H.

Only a portion of side wall 230 may have a bent shape and this bent shaped portion may form extension portion 231. Only a portion of side wall 240 may have a bent shape and this bent shaped portion may form extension portion 241. Side walls 230 and 240 each may have a bellows-like structure having a plurality of bends. Only a portion of side wall 230 may have a portion extending in the direction inclined with respect to stacking direction H, and this inclined portion may form extension portion 231. Only a portion of side wall 240 may have a portion extending in the direction inclined with respect to stacking direction H, and this inclined portion may form extension portion 241. Side wall 230 may have an even number of right-angled bent portions that may form extension portion 231. Side wall 240 may have an even number of right-angled bent portions that may form extension portion 241.

Insulating sheet 300 covers the inner surface of accommodation case 200. Insulating sheet 300 may further cover the upper surface of top plate 210 and the lower surface of bottom plate 220.

Filling portions 400 and 401 each are made of an insulating material. Filling portions 400 and 401 each are preferably made of a material having thermal conductivity and elasticity. Filling portions 400 and 401 each are formed by injecting the above-mentioned material (a potting material in the present embodiment) into accommodation case 200 through an inlet port h formed in top plate 210 of accommodation case 200.

Filling portion 400 is formed to extend from side wall 230 to reach power storage module 100. Filling portion 401 is formed to extend from side wall 240 to reach power storage module 100. Filling portions 400 and 401 each cover the tip end of each protrusion 122. Filling portions 400 and 401 each cover the entire area of each protrusion 122 together with each adhesive member 140. Filling portions 400 and 401 each may cover the ends of each adhesive member 140 and each laminate film 130.

Filling portions 400 and 401 each preferably cover the entire areas of bus bars 13, 14, and 15. Filling portion 400 is preferably in contact with insulating sheet 300 provided on the inner surface of side wall 230 of accommodation case 200. Filling portion 401 is preferably in contact with insulating sheet 300 provided on the inner surface of side wall 240 of accommodation case 200.

Expansion absorbing member 500 is disposed inside accommodation case 200. Expansion absorbing member 500 is disposed between first stack 102 and second stack 103 in stacking direction H. Expansion absorbing member 500 is disposed between power storage cells 101B and 101C in stacking direction H. Expansion absorbing member 500 is sandwiched between power storage cells 101B and 101C in stacking direction H. Expansion absorbing member 500 is disposed on the lower surface of power storage cell 101B and disposed on the upper surface of power storage cell 101C.

Expansion absorbing member 500 is made of a metal material. Expansion absorbing member 500 has a corrugated plate shape. The outer peripheral edge portion of expansion absorbing member 500 has a rectangular shape when viewed in stacking direction H. Expansion absorbing member 500 has a long side extending in longitudinal direction L and a short side extending in width direction W.

Expansion absorbing member 500 has curved portions 502 and 504. In this case, a plurality of curved portions 502 and a plurality of curved portions 504 are provided. Curved portions 502 and 504 each extend in longitudinal direction L in which the long side of expansion absorbing member 500 extends. Curved portions 502 and curved portions 504 are alternately arranged in width direction W. Expansion absorbing member 500 is formed to be longer in longitudinal direction L than in width direction W.

Curved portion 502 is formed to protrude toward one side (upward in Fig. 1) in stacking direction H. Curved portion 502 is in contact with laminate film 130 of power storage cell 101B. Curved portion 504 is formed to protrude toward the other side (downward in Fig. 1) in stacking direction H. Curved portion 504 is in contact with laminate film 130 of power storage cell 101C.

In width direction W, one end of expansion absorbing member 500 penetrates into filling portion 400, and the other end of expansion absorbing member 500 penetrates into filling portion 401. One end of expansion absorbing member 500 penetrates through filling portion 400 and insulating sheet 300 provided on the inner surface of side wall 230 of accommodation case 200, and then, is connected to side wall 230. The other end of expansion absorbing member 500 penetrates through filling portion 401 and insulating sheet 300 provided on the inner surface of side wall 240 of accommodation case 200, and then, is connected to side wall 240.

In width direction W, both ends of expansion absorbing member 500 are connected to respective side walls 230 and 240 of accommodation case 200. Expansion absorbing member 500 is welded, for example, to side walls 230 and 240. Expansion absorbing member 500 is provided with a through hole 503 into which bus bar 15 is inserted.

As a result of charging and discharging in power storage device 10 having the above-described configuration, each of power storage cells 101 deforms to expand in stacking direction H.

Side wall 230 of accommodation case 200 has extension portion 231 extending in the direction intersecting with stacking direction H. Side wall 240 of accommodation case 200 has extension portion 241 extending in the direction intersecting with stacking direction H. When each power storage cell 101 expands in stacking direction H, extension portions 231 and 241 each deform to decrease the angle at which each of extension portions 231 and 241 is inclined with respect to stacking direction H. Side walls 230 and 240 each entirely deform to have a shape more similar to a flat plate and extend in stacking direction H. Side walls 230 and 240 each deform to extend in stacking direction H in accordance with expansion of each power storage cell 101. Side walls 230 and 240 are configured to be variable in dimension in stacking direction H.

When each power storage cell 101 expands in stacking direction H, side walls 230 and 240 also extend in stacking direction H. This suppresses an increase in force with which the stack of expanded power storage cells 101 presses top plate 210 and bottom plate 220 of accommodation case 200. Since the force acting on top plate 210 and bottom plate 220 of power storage module 100 is small, the reaction of this force also suppresses an increase in force acting on each power storage cell 101. Thus, an increase in pressure acting on each power storage cell 101 can be suppressed.

Since side walls 230 and 240 each have a bent shape, side walls 230 and 240 each can reliably have a portion extending in the direction intersecting with stacking direction H.

Power storage device 10 includes corrugated plate-shaped expansion absorbing member 500 between power storage cell 101B of first stack 102 and power storage cell 101C of second stack 103. Thereby, when each power storage cell 101 expands in stacking direction H, expansion absorbing member 500 deforms such that the protrusions of curved portions 502 and 504 become smaller. As curved portions 502 and 504 deform, the dimension of expansion absorbing member 500 in stacking direction H decreases. This further suppresses an increase in force with which the stack of expanded power storage cells 101 presses top plate 210 and bottom plate 220 of accommodation case 200. Accordingly, an increase in pressure acting on each power storage cell 101 can be more reliably suppressed.

When power storage device 10 is mounted on a vehicle, power storage device 10 may undergo vibrations due to traveling of the vehicle. Accommodation case 200 is formed to be longer in longitudinal direction L. Thus, when power storage device 10 vibrates, power storage device 10 is more likely to vibrate in the state where both ends in longitudinal direction L act as fixed ends and a central portion in longitudinal direction L acts as an antinode portion. Since power storage device 10 includes expansion absorbing member 500 having a corrugated plate shape, and curved portions 502 and 504 of expansion absorbing member 500 extend in longitudinal direction L, the flexural rigidity of power storage device 10 can be improved. Thereby, during vibration of power storage device 10, deformation of power storage device 10 can be suppressed, and occurrence of resonance can be avoided.

Since expansion absorbing member 500 is connected to side walls 230 and 240 of accommodation case 200 in width direction W, the flexural rigidity of power storage device 10 can be more reliably improved. Also, since the heat generated by power storage cells 101B and 101C can be transferred to each of side walls 230 and 240 through expansion absorbing member 500, dissipation of heat from power storage cells 101B and 101C can be promoted, so that the cooling performance can be improved.

### (Second Embodiment)

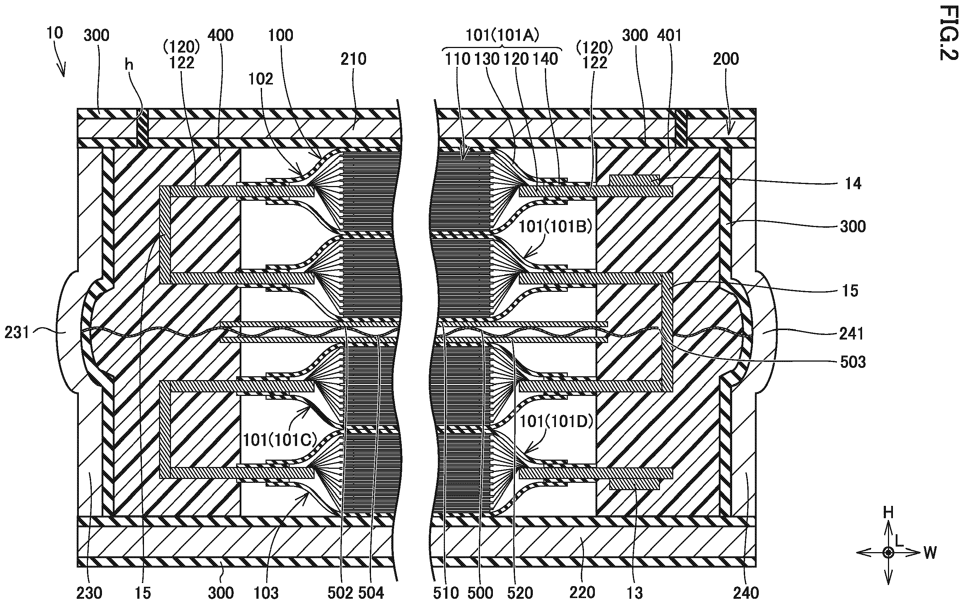

In the description about the example in the first embodiment, extension portions 231 and 241 each have a bent shape, but the shapes of extension portions 231 and 241 are not limited thereto and each may be a curved shape. Fig. 2 is a cross-sectional view schematically showing the configuration of a power storage device 10 according to the second embodiment.

In the second embodiment shown in Fig. 2, only a portion of side wall 230 in the vicinity of its central portion in stacking direction H has a curved shape, and this curved portion forms extension portion 231. Also, only a portion of side wall 240 in the vicinity of its central portion in stacking direction H has a curved shape, and this curved portion forms extension portion 241. Side walls 230 and 240 are shaped such that their respective extension portions 231 and 241 protrude in the direction away from power storage module 100. Extension portions 231 and 241 each may have any curvature. Although extension portions 231 and 241 shown in Fig. 2 each are shaped to have an elliptical cylindrical surface, extension portions 231 and 241 each may be shaped to have any curved surface such as a circular cylindrical surface or a parabolic cylindrical surface, for example.

Each of side walls 230 and 240 in the second embodiment has a portion extending in stacking direction H and a portion extending in the direction intersecting with stacking direction H. As to extension portions 231 and 241 each having a curved shape, the direction in which the tangent plane of each of extension portions 231 and 241 extend may be defined as a direction in which extension portions 231 and 241 extend. Only a portion of side wall 230 extends in the direction intersecting with stacking direction H and this portion forms extension portion 231. Only a portion of side wall 240 extends in the direction intersecting with stacking direction H and this portion forms extension portion 241.

When each power storage cell 101 expands in stacking direction H, extension portions 231 and 241 each deform to reduce the curvature of the curve so as to have a shape more similar to a flat plate. Side walls 230 and 240 each deform to have a shape entirely more similar to a flat plate and extend in stacking direction H. Side walls 230 and 240 each deform to extend in stacking direction H in accordance with expansion of each power storage cell 101. Side walls 230 and 240 each are configured to be variable in dimension in stacking direction H.

When each power storage cell 101 expands in stacking direction H, side walls 230 and 240 also extend in stacking direction H. This suppresses an increase in force with which the stack of expanded power storage cells 101 presses top plate 210 and bottom plate 220 of accommodation case 200. Since the force of power storage module 100 acting on top plate 210 and bottom plate 220 is small, the reaction of this force also suppresses an increase in force acting on each power storage cell 101. Thus, an increase in pressure acting on each power storage cell 101 can be suppressed.

In place of extension portions 231 and 241 shown in Fig. 2, side wall 230 may entirely have a curved shape, side wall 230 may entirely form extension portion 231, side wall 240 may entirely have a curved shape, and side wall 240 may entirely form extension portion 241.

Power storage device 10 in the second embodiment further includes flat plates 510 and 520. Flat plates 510 and 520 each are made of a metal material having high thermal conductivity. Flat plates 510 and 520 are spaced apart from each other in stacking direction H. Expansion absorbing member 500 is disposed between flat plates 510 and 520. Flat plate 510 is disposed on the upper surface of expansion absorbing member 500 and is in contact with curved portion 502. Flat plate 520 is disposed on the lower surface of expansion absorbing member 500 and is in contact with curved portion 504. Flat plate 510 is disposed on the lower surface of power storage cell 101B. Flat plate 520 is disposed on the upper surface of power storage cell 101C.

Flat plates 510 and 520 each are formed to be longer in longitudinal direction L than in width direction W. In width direction W, flat plates 510 and 520 each have: one end penetrating into filling portion 400; and the other end penetrating into filling portion 401.

Upon charging and discharging of power storage device 10, the temperature of power storage module 100 rises. Power storage cells 101B and 101C are located in the central area of power storage module 100 in stacking direction H. Thus, the heat of each of power storage cells 101B and 101C is less likely to be dissipated directly to accommodation case 200.

Power storage cell 101B is in contact with flat plate 510. The heat of power storage cell 101B is transferred to flat plate 510. Power storage cell 101C is in contact with flat plate 520. The heat of power storage cell 101C is transferred to flat plate 520. In width direction W, both ends of flat plate 510 reach respective filling portions 400 and 401 and both ends of flat plate 520 reach respective filling portions 400 and 401. Thus, the heat transferred to each of flat plates 510 and 520 is transferred through filling portions 400 and 401 to side walls 230 and 240, respectively, and then dissipated from side walls 230 and 240 to the outside. Thereby, dissipation of heat of power storage cells 101B and 101C can be promoted, so that a temperature rise in power storage module 100 can be suppressed.

### (Third Embodiment)

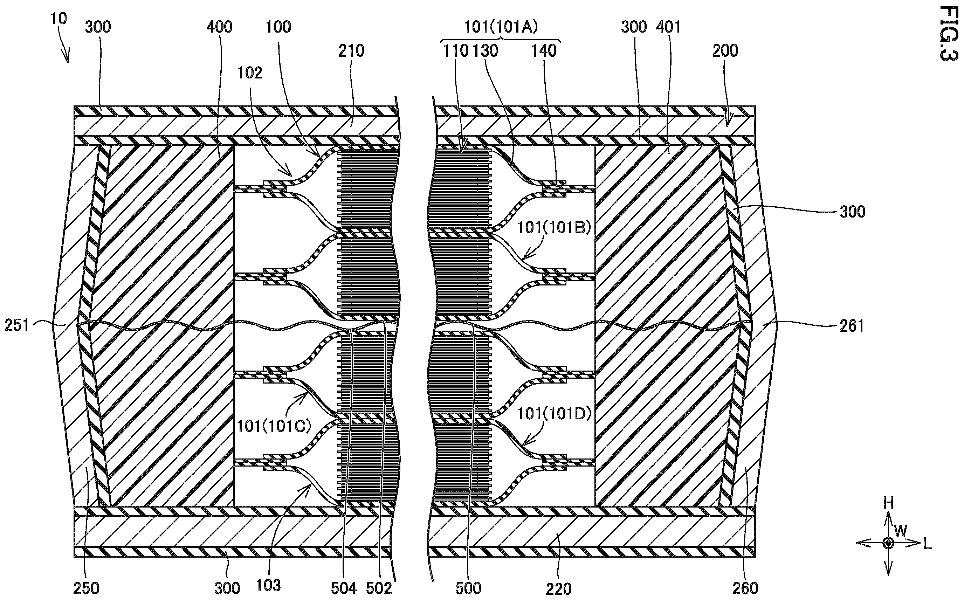

Fig. 3 is a cross-sectional view schematically showing the configuration of a power storage device 10 according to the third embodiment. Fig. 3 shows a cross section of power storage device 10 different from the cross sections shown in Figs. 1 and 2. In Figs. 1 and 2, the left-right direction in each of the figures corresponds to width direction W while the direction perpendicular to the surface of the sheet of paper showing each of the figures corresponds to longitudinal direction L. In contrast, in Fig. 3, the left-right direction in the figure corresponds to longitudinal direction L while the direction perpendicular to the surface of the sheet of paper showing the figure corresponds to width direction W.

In the description about the example in each of the first and second embodiments, side walls 230 and 240 of accommodation case 200 have extension portions 231 and 241, respectively. Accommodation case 200 having a substantially rectangular parallelepiped shape further includes end walls 250 and 260 disposed to face each of first stack 102 and second stack 103 in longitudinal direction L (in the left-right direction in Fig. 3). End walls 250 and 260 may be provided with extension portions 251 and 261, respectively, similar to those of side walls 230 and 240. In this case, end walls 250 and 260 are also included in the second wall portion in the embodiment.

In the description about the example in each of the first and second embodiments, both ends of expansion absorbing member 500 are connected to respective side walls 230 and 240 of accommodation case 200. As shown in Fig. 3, both ends of expansion absorbing member 500 in longitudinal direction L may be connected to respective end walls 250 and 260 of accommodation case 200. Expansion absorbing member 500 is, for example, welded to end walls 250 and 260.

Expansion absorbing member 500 may have curved portions 502 and 504 extending in longitudinal direction L as described in the first and second embodiments, or may have curved portions 502 and 504 extending in width direction W as shown in Fig. 3. Curved portions 502 and 504 may extend in longitudinal direction L corresponding to the direction in which the long side of expansion absorbing member 500 extends, may extend in width direction W corresponding to the direction in which the short side of expansion absorbing member 500 extends, or may extend both in longitudinal direction L and width direction W.

In the third embodiment in which both ends of expansion absorbing member 500 in longitudinal direction L are connected to respective end walls 250 and 260 of accommodation case 200, both ends of expansion absorbing member 500 in width direction W may not be connected to respective side walls 230 and 240 of accommodation case 200. The outer peripheral edge portion of expansion absorbing member 500 in the short side direction may be disposed on the side closer to power storage module 100 than bus bar 15 that connects protrusions 122 of current collector plates 120 shown in Figs. 1 and 2. In this case, expansion absorbing member 500 does not necessarily have to be provided with through hole 503 (Figs. 1 and 2) into which bus bar 15 is inserted.

In the description about the example in each of the above embodiments, expansion absorbing member 500 is disposed between first stack 102 and second stack 103 in stacking direction H, and is sandwiched between power storage cells 101B and 101C in stacking direction H. The arrangement of expansion absorbing member 500 is however not limited to this example. Expansion absorbing member 500 may be sandwiched between power storage cells 101A and 101B in stacking direction H, or may be sandwiched between power storage cells 101C and 101D in stacking direction H.

In the description about the example in each of the above embodiments, each power storage cell 101 included in power storage module 100 is a laminate-type battery in which electrode assemblies 110 and an electrolytic solution are accommodated in laminate film 130. Without being limited thereto, each power storage cell 101 may be a laminate-type all-solid-state battery in which an electrolytic solution is not accommodated in laminate film 130 but a solid electrolyte is used instead.

Although the present disclosure has been described and illustrated in detail, it is clearly understood that the same is by way of illustration and example only and is not to be taken by way of limitation, the scope of the present disclosure being interpreted by the terms of the appended claims.

## Claims

1. A power storage device (10) comprising:
a stack (102, 103) in which a plurality of power storage cells (101) are stacked in a stacking direction (H); and
an accommodation case (200) that accommodates the stack (102, 103), wherein
the accommodation case (200) includes
a first wall portion (210, 220) facing the stack (102, 103) in the stacking direction (H), and
a second wall portion (230, 240) facing the stack (102, 103) in a direction orthogonal to the stacking direction (H), and
the second wall portion (230, 240) has an extension portion (231, 241) extending in a direction intersecting with the stacking direction (H).

2. The power storage device (10) according to claim 1, wherein the second wall portion (230, 240) has a bent shape or a curved shape.

3. The power storage device (10) according to claim 1 or 2, further comprising an expansion absorbing member (500) having a corrugated plate shape and disposed between the power storage cells (101) in the stacking direction (H).

4. The power storage device (10) according to claim 3, wherein the expansion absorbing member (500) is connected to the second wall portion (230, 240).
